Europäisches Patentamt

European Patent Office

Office européen des brevets

(11) Publication number: **0 130 078**
**B1**

(12) **EUROPEAN PATENT SPECIFICATION**

(45) Date of publication of patent specification: **16.09.87**

(51) Int. Cl.⁴: **B 21 D 51/44**, B 21 D 43/00

(21) Application number: **84304310.0**

(22) Date of filing: **26.06.84**

(54) Can end sampler.

(30) Priority: **27.06.83 US 508083**

(43) Date of publication of application:
**02.01.85 Bulletin 85/01**

(45) Publication of the grant of the patent:
**16.09.87 Bulletin 87/38**

(84) Designated Contracting States:
**AT BE DE FR GB IT NL**

(56) References cited:
**US-A-1 408 861**
**US-A-1 923 753**

(73) Proprietor: **REYNOLDS METALS COMPANY**
**6601 West Broad Street**
**Richmond, VA 23261 (US)**

(72) Inventor: **Dingus, Jack Davis**
**Route 2**
**Castlewood Virginia 24224 (US)**
Inventor: **Gilliam, Edward Carroll**
**356 Monticello Drive**
**Bristol Virginia 24201 (US)**

(74) Representative: **Bass, John Henton et al**
**REDDIE & GROSE 16 Theobalds Road**
**London WC1X 8PL (GB)**

Courier Press, Leamington Spa, England.

## Description

Each day, millions of beverages, such as soft drinks and beer, are consumed from metallic cans. Such cans are formed from cylinders or shells and have at least one end closure affixed thereto. The substantial majority of such can ends now include an easy-opening feature thereon. These easy-opening features are formed by such metal working processes as stamping, drawing, scoring and the like. Careful control must be maintained of the end forming process, since close tolerances must be maintained to produce an end in which the easy-opening feature will function as designed while at the same time produce an end which will not prematurely leak or otherwise fail under the internal pressures of a carbonated beverage packaged within the can. Such pressures may exceed 90 lbs per square inch (6327.9 kg per square meter).

In order to maintain process control, it is common practice to test sample ends at regular intervals. Typically, a packing line operator will isolate several ends for test for every sleeve of ends packaged. A sleeve of ends contains approximately 200 ends. When a sufficient quantity of isolated ends have been gathered, they are transferred to a test station where they are punished and tested under pressure. Of course, prior to and during the testing of these ends, the end line is still producing ends. Should any of the test ends fail, all ends produced on the end line from the time of the initial failure must be individually tested until the cause of the failure is determined and is corrected. This requires unpackaging, testing and repackaging of thousands of ends.

Apparatus can be provided for testing sample ends in line with the can end forming operation to give substantially immediate feedback on end quality, but in order for such an apparatus to function, the apparatus must be fed sample ends from the end forming line at regular intervals. It is thus desirable to produce a device which periodically isolates sample ends from the can end forming line for direction to a testing station.

In US—A—1 408 861 there is described a can feeder comprising a main can guide and a plurality of branch guides down which the cans pass by gravity. A lower branch guide has a stop which projects into the path of a can in the lower guide to permit a can to pass from the main guide down an upper branch guide, and is retractable periodically to permit a can to pass down the lower guide.

In US—A—1 923 753 there is described a device for disturbing articles such as container closures to a plurality of machines, the apparatus comprising a generally horizontally input path, a first reciprocatable deflector disposed in the said path, a first chute to collect and pass ends when the first deflector is in a first position, a second chute to receive and pass ends when the first deflector is in a second position, and a second deflector disposed in the second chute to intercept ends and remove them from the second chute.

The present invention is characterised in that the first deflector is vertically reciprocatable and has a generally horizontal surface, over which can ends arriving by the input path can pass with their movement unaffected to the second chute when the first deflector is in its downward position, and a generally vertical deflecting surface which intercepts and deflects can ends into the first chute when the first deflector is in its upward position, and that the second deflector is a reciprocatable between a closed and an open position and has a surface over which can ends passing along the second chute can pass with their movement unaffected when the second deflector is in its closed position, and a deflecting surface which intercepts and deflects can ends out of the second chute when the second deflector is in its open position.

Brief Description of the Drawings

The can end sampler of the present invention will be more fully described with reference to the drawings in which:

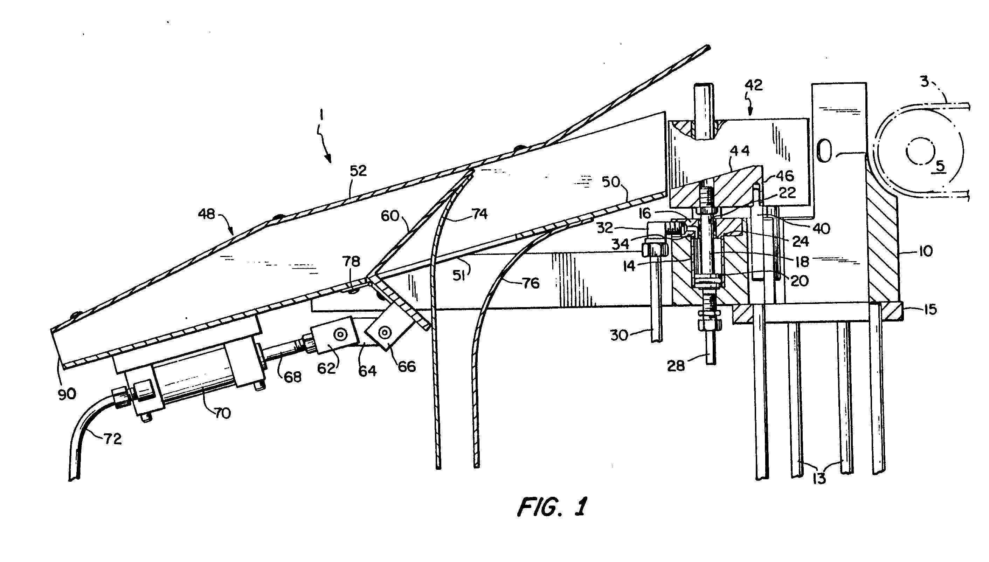

FIGURE 1 is a front cross-sectional view of the can end sampler according to a preferred embodiment of the present invention; and

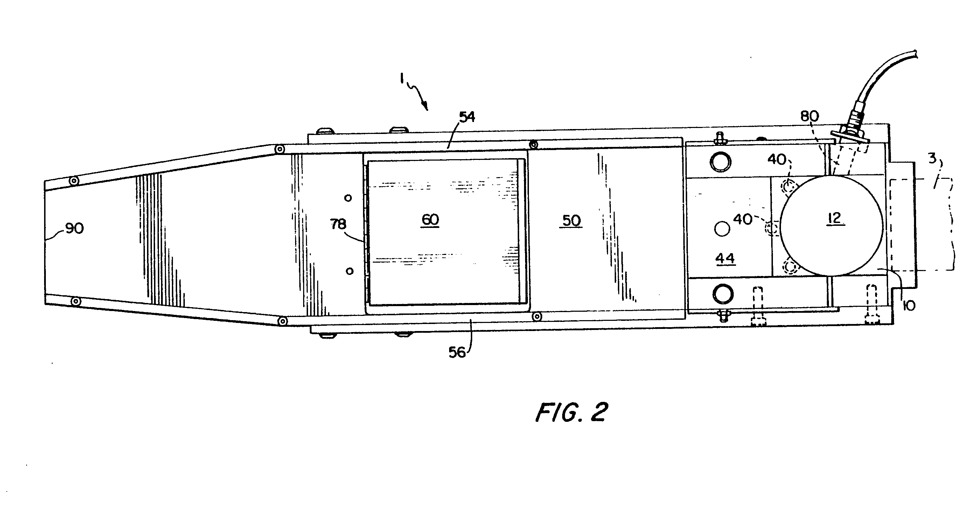

FIGURE 2 is a top view of the can end sampler.

Detailed Description of the Preferred Embodiment

Turning now to the FIGURES, the can end sampler 1 is illustrated adjacent to a continuous belt 3 passing around a pulley 5. Can ends from a can end forming line are passed along the top surface of the belt 3 and into the sampling device 1.

As illustrated, the sampling device 1 is arranged for acceptance of can ends to be discarded as scrap. During any start-up of an end press, the potential for defective ends to be formed is higher than normal, even if the press is operating properly. Thus, during start-up of an end press, the first several ends produced are collected as scrap.

As the ends leave the moving belt 3, they pass over a chute opening 12 in a base housing 10 of the end sampler 1 and are carried by their momentum onto surface 44 of deflector 42. Deflector 42 is in its sampling position, as will be more fully described below. The ends then pass along chute surface 50 and impinge upon deflector surface 74, passing through opening 51 in surface 50 and between deflectors 74 and 76 to scrap storage.

The strokes of the end press are counted. After a predetermined number of strokes, typically from 3 to 6 strokes, pressurized air is no longer supplied through line 72 to air cylinder 70. This causes piston rod 68 to retract toward piston 70 pulling brackets 62 and 66 and linkage 64 therebetween toward cylinder 70, lowering door 60 about hinge 78, such that any ends passing along surface 50 will exit from discharge point 90. A sensor 80 controls the level of the ends in base housing 10 by starting and stopping the discharge conveyor.

At the same time as air supply to air cylinder 70 ceases, pressurized air is supplied through line 28. This causes piston 20 and piston rod 18 associated therewith to move upwardly. Piston 20 is sealed within base 10 by means of sleeves 14, 16 and 22 and O-ring 24.

As piston rod 18 moves upwardly, ends exiting belt 3 no longer pass over deflector 42 along surface 44, but rather are now intercepted by deflector surface 46 and pass downwardly through opening 12 and into a discharge chute formed from rails 13 and face plate 15.

Ends exiting through rails 13 may be directed, for example, to another belt similar to belt 3 from which they entered the sampler 1, or they may pass along other conveying means well-known to those in the art for conveying ends to, for example, a packing station.

As previously mentioned, the major purpose of the apparatus 1 is to periodically sample can ends from production. As with the initial can ends which were passed to scrap, the end press strokes are counted and the resulting ends, one end per stroke, fall into opening 12. After a predetermined number of strokes have occurred, for example, in the order of 200 strokes, a counter (not shown) gives a signal to reverse compressed air flow from line 28 to line 30, causing air to flow through elbow 32 and inlet 34, forcing piston 20, piston rod 18 and deflector 42 downwardly. Alignment of deflector 42 is maintained during upward and downward movement through means of pins 40.

With deflector 42 again in its downward position and with door 60 closed, can ends pass from belt 3 over surfaces 44 and 50 and out exit point 90.

It should be noted that air is supplied to line 30 during start-up as previously mentioned, as well as during collection of sample ends.

Again, strokes of the end press are counted, and after a predetermined number of strokes have occurred, air supply is returned to line 28.

The ends passing through exit 90 may be collected for transport to a collecting station, or for other purposes. Preferably, however, exit point 90 would be connected to the input of a can end tester, such that can ends are tested substantially in-line with their production.

A cover 52 may cover the conveying surface 50 and sidewalls 54 and 56 of chute 48, and is preferably formed of a material such as Plexiglass®, so that observation of system operation may be made.

From the foregoing, it is clear that the present invention provides a means for controlling can end movement in a can end forming line which permits sample ends to be isolated from production and which may also permit known potentially defective ends to be isolated from normal production.

## Claims

1. Apparatus for controlling can end movement comprising a generally horizontal input path (3), a first reciprocatable deflector (42) disposed in the said path, a first chute (13) to collect and pass ends when the first deflector (42) is in a first position, a second chute (48) to receive and pass ends when the first deflector (42) is in a second position, and a second deflector (60) disposed in the second chute (48) to intercept ends and remove them from the second chute (48), characterized in that the first deflector (42) is vertically reciprocatable and has a generally horizontal surface (44), over which can ends arriving by the input path (3) can pass with their movement unaffected to the second chute (48) when the first deflector (42) is in its downward position, and a generally vertical deflecting surface (46) which intercepts and deflects can ends into the first chute (13) when the first deflector (42) is in its upward position, and that the second deflector (60) is reciprocatable between a closed and an open position and has a surface over which can ends passing along the second chute (48) can pass with their movement unaffected when the second deflector (60) is in its closed position, and a deflecting surface (74) which intercepts and deflects can ends out of the second chute (48) when the second deflector (60) is in its open position.

2. Apparatus according to Claim 1, wherein the first chute (13) comprises a plurality of generally vertical rails (13) for guiding a stack of can ends.

3. Apparatus according to Claim 1 or 2, wherein the second chute (48) comprises a conveyor surface (50).

4. Apparatus according to Claim 1, 2 or 3, wherein the second deflector (60) is pivotable about a generally horizontal axis (78) and a third chute (76) is disposed beneath the second deflector to receive can ends deflected from the second chute (48) when the deflector (60) is in its open position.

5. Apparatus according to any of Claims 1 to 4, wherein the first (42) and/or second deflector (60) is/are reciprocated by means of an air cylinder or cylinders (14, 70).

6. Apparatus according to any of claims 1 to 5, wherein in use the first chute (13) directs can ends to a further conveyor or packing station, and the second chute (48) directs can ends to a collecting or testing station when the second deflector (60) is closed and to scrap when the second deflector (60) is open.

## Patentansprüche

1. Vorrichtung, um die Bewegung von Dosenenden zu steuern, wobei die Vorrichtung einen im wesentlichen horizontalen Beschickungsweg (3), einen ersten hin- und herbewegbaren Ablenker (42), der in diesem Weg angeordnet ist, eine erste Rinne (13), um die Enden zu sammeln und weiterzuleiten, wenn sich der erste Ablenker (42) in einer ersten Stellung befindet, eine zweite Rinne (48), um die Enden aufzunehmen und weiterzuleiten, wenn sich der erste Ablenker (42) in einer zweiten Stellung befindet, sowie einen zweiten Ablenker (60) enthält, der in der zweiten Rinne (48) angeordnet ist, um Enden abzufangen und von der zweiten Rinne (48) zu beseitigen, dadurch gekennzeichnet, daß der erste Ablenker (42) senkrecht hin- und herbewegbar ist und eine im allgemeinen horizontale Fläche (44) besitzt, über die Dosenenden, die vom Beschickungsweg (3) ankommen, laufen können, wobei ihre Bewegung zur zweiten Rinne (48) unbeeinflußt bleibt, wenn sich der erste Ablenker (42) in seiner unteren Stellung befindet, sowie eine im allgemeinen senkrechte Ablenkfläche (46) besitzt, die die Dosenenden abfängt und in die erste Rinne (13) ablenkt, wenn sich der erste Ablenker (42) in seiner oberen Stellung befindet, und daß der zweite Ablenker (60) zwischen einer geschlossenen und einer offenen Stellung hin- und herbewegbar ist und eine Fläche besitzt, über die die Dosenenden, die entlang der zweiten Rinne (48) laufen, laufen können, wobei ihre Bewegung unbeeinflußt bleibt, wenn sich der zweite Ablenker (60) in seiner geschlossenen Stellung befindet, sowie eine Ablenkfläche (74) besitzt, die Dosenenden abfängt und aus der zweiten Rinne (48) ablenkt, wenn sich der zweite Ablenker (60) in seiner offenen Stellung befindet.

2. Vorrichtung gemäß Anspruch 1, wobei die erste Rinne (13) eine Vielzahl von im allgemeinen vertikalen Führungen (13) enthält, um einen Stapel von Dosenenden zu führen.

3. Vorrichtung gemäß Anspruch 1 oder 2, wobei die zweite Rinne (48) eine Förderfläche (50) enthält.

4. Vorrichtung gemäß Anspruch 1, 2 oder 3, wobei der zweite Ablenker (60) um eine im wesentlichen horizontale Achse (78) verschwenkbar ist, wobei eine dritte Rinne (76) unterhalb des zweiten Ablenkers angeordnet ist, um Dosenenden aufzunehmen, die von der zweiten Rinne (48) abgelenkt werden, wenn sich der Ablenker (60) in seiner offenen Stellung befindet.

5. Vorrichtung gemäß jedem der Ansprüche 1 bis 4, wobei der erste (42) und/oder zweite Ablenker (60) mit Hilfe eines Druckluftzylinders oder Zylindern (14, 70) hin- und herbewegbar ist.

6. Vorrichtung gemäß jedem der Ansprüche 1 bis 5, wobei im Betrieb die erste Rinne (13) Dosenenden zu einer weiteren Förder- oder Paketierungsstation leitet, und wobei die zweite Rinne (48) Dosenenden zu einer Sammel- oder Prüfstation leitet, wenn der zweite Ablenker (60) geschlossen ist, und zum Ausschuß leitet, wenn der zweite Ablenker (60) geöffnet ist.

**Revendications**

1. Appareil pour commander le mouvement de couvercles de boîtes, comprenant un trajet d'entrée sensiblement horizontal (3), un premier déflecteur (42) animé d'un va-et-vient et situé sur ledit trajet, un premier toboggan (13) assurant le regroupement et le passage de couvercles lorsque le premier déflecteur (42) occupe une première position, un second toboggan (48) assurant la réception et le passage de couvercles lorsque le premier déflecteur (42) occupe une seconde position, ainsi qu'un second déflecteur (60) disposé dans le second toboggan (48) pour intercepter des couvercles et les évacuer du second toboggan (48), caractérisé par le fait que le premier déflecteur (42) peut accomplir un va-et-vient vertical et possède une surface sensiblement horizontale (44) sur laquelle des couvercles de boîtes, arrivant par le trajet d'entrée (3), peuvent circuler sans aucune gêne de leur mouvement vers le second toboggan (48) lorsque le premier déflecteur (42) occupe sa position basse, ainsi qu'une surface déflectrice sensiblement verticale (46) qui intercepte et dévie les couvercles de boîtes dans le premier toboggan (13) lorsque le premier déflecteur (42) occupe sa position haute; et par le fait que le second déflecteur (60) peut accomplir un va-et-vient entre des positions fermée et ouverte, et possède une surface sur laquelle des couvercles de boîtes, passant le long du second toboggan (48), peuvent circuler sans aucune gêne de leur mouvement lorsque le second déflecteur (60) occupe sa position fermée, ainsi qu'une surface déflectrice (74) qui intercepte et dévie les couvercles de boîtes hors du second toboggan (48) lorsque le second déflecteur (60) occupe sa position ouverte.

2. Appareil selon la revendication 1, dans lequel le premier toboggan (13) comprend plusieurs rails sensiblement verticaux (13) pour guider une pile de couvercles de boîtes.

3. Appareil selon la revendication 1 ou 2, dans lequel le second toboggan (48) présente une surface convoyeuse (50).

4. Appareil selon la revendication 1, 2 ou 3, dans lequel le second déflecteur (60) peut pivoter autour d'un axe sensiblement horizontal (78), et un troisième toboggan (76) est disposé au-dessous du second déflecteur pour recevoir des couvercles de boîtes déviés à partir du deuxième toboggan (48), lorsque le déflecteur (60) occupe sa position ouverte.

5. Appareil selon l'une quelconque des revendications 1 à 4, dans lequel le premier (42) et/ou second déflecteur (60) est/sont animé(s) d'un va-et-vient au moyen d'un ou de vérin(s) pneumatique(s) (14, 70).

6. Appareil selon l'une quelconque des revendications 1 à 5, dans lequel, en service, le premier toboggan (13) dirige des couvercles de boîtes vers un convoyeur ou poste successif de chargement, et le second toboggan (48) dirige des couvercles de boîtes vers un poste de regroupement ou de vérification lorsque le second déflecteur (60) est fermé, et vers le rebut lorsque ce second déflecteur (60) est ouvert.

FIG. 1

FIG. 2